# EUROPÄISCHE PATENTANMELDUNG

(11) **EP 2 786 946 A1**
(43) Veröffentlichungstag der Anmeldung: **08.10.2014**
(21) Anmeldenummer: 13162285.4
(22) Anmeldetag: 04.04.2013
(51) Int. Cl.: B65G 1/04, B65G 1/137

(54) **Magnetfördertechnik für ein Transportsystem**

(71) Anmelder: Knapp AG, 8075 Hart bei Graz (AT)
(72) Erfinder: Koholka, Roland, 8502 Lannach (AT)
(74) Vertreter: Schwarz & Partner

(57) **Zusammenfassung**

Bei einem Transportsystem (7) für ein Sortier- und Verteilsystem vorzugsweise in einem Kommissioniersystem zum Lagern und Kommissionieren von Produkten, wobei das Transportsystem (7) zumindest eine Hauptschleife (12) zum Transportieren von Produkten, mindestens eine Aufnahmevorrichtung (6.1 bis 6.14) zum Aufnehmen der Produkte und mindestens zwei Abgabevorrichtungen (20.1 bis 20.12) zum Abgeben der Produkte aufweist, wobei Aufnahmevorrichtungen (6.1 bis 6.14) und Abgabevorrichtungen (20.1 bis 20.12) in Nebenschleifen angeordnet sind, ist vorgesehen, dass das Transportsystem (7) individuell steuerbare schienengebundene passive Shuttles (10) zum Transport der aufgenommenen Produkte und eine Steuereinrichtung (4) zum Steuern der einzelnen Shuttles (10) aufweist und, dass das Transportsystem (7) zum magnetischen Antreiben der Shuttles (7) einen direkten magnetischen Antrieb aufweist, der aus einer Vielzahl von an den Schienen angeordneten individuell ansteuerbaren Linearmotoren gebildet ist.

## Beschreibung

Die Erfindung betrifft ein Transportsystem für ein Sortier- und Verteilsystem vorzugsweise in einem Kommissioniersystem zum Lagern und Kommissionieren von Produkten, wobei das Transportsystem zumindest eine Hauptschleife zum Transportieren von Produkten, mindestens eine Aufnahmevorrichtung zum Aufnehmen der Produkte und mindestens zwei Abgabevorrichtungen zum Abgeben der Produkte aufweist, wobei Aufnahmevorrichtungen und Abgabevorrichtungen in Nebenschleifen angeordnet sind.

Das Dokument EP 1 224 038 B1 offenbart ein solches Transportsystem zum Sortieren und Verteilen von aus dem Lager ausgelagerten Produkten und von in das Lager einzulagernden Produkten. Das Transportsystem weist einen Kreisförderer auf, der eine Hauptschleife bildet und auf dem die Produkte mittels eines durchgehenden Glieds beziehungsweise einem Förderband transportiert werden. Aus den Regalen des Lagersystems ausgelagerte Produkte werden dem Kreisförderer über einen von zwei Zufuhrförderern zugeführt, die Nebenschleifen bilden und deren Produktströme über eine gemeinsame Weiche vereint werden. Um über die beiden Zufuhrförderer zugeführte Produkte kollisionsfrei an der Weiche auf einen freien Platz auf dem Kreisförderer zu transportieren, müssen die Geschwindigkeiten der Zufuhrförderer und des Kreisförderers ständig verändert werden. Durch unterschiedliche Transportgeschwindigkeiten der drei Förderbänder werden Lücken zwischen Produkten geschaffen und durch Zusammenführung auf dem Kreisförderer und Ausschleusung auf Zielförderbänder werden die Produkte in die für das Kommissionieren erforderliche Reihenfolge gebracht.

Bei dem bekannten Transportsystem hat sich als Nachteil ergeben, dass die ständige Änderung der Geschwindigkeit der drei Förderbänder, auf denen sich sämtliche aus dem Lager ausgelagerten Produkte und in das Lager einzulagernde Produkte befinden, zu hohen Energiekosten des Transportsystems führt, da große Massen abgebremst und wieder beschleunigt werden müssen. Je nach Form, Gewicht und Lage der Produkte auf den Förderbändern kann ein plötzliches Abbremsen oder Beschleunigen zum Verrutschen oder Umfallen von Produkten auf dem Förderband oder sogar zum Herunterfallen von Produkten von dem Förderband führen. Um dies zu vermeiden kann das Transportsystem nur relativ langsam abbremsen und beschleunigen. Hierdurch dauert es länger Lücken auf den Förderbändern zu schaffen, wodurch die Transportleistung und Sorterleistung des bekannten Transportsystems relativ niedrig ist. Außerdem ist der Mechanismus zur Synchronisation der Förderbänder mit dem Kreisförderer durch die vielen individuell ansteuerbaren Förderbänder kostenintensiv und verbracht viel Platz. Es müssen, um eine wirtschaftliche Lösung zu erreichen, mehrere Auslagerbahnen eines Regals auf eine Einschleusung zusammengeführt werden. Diese Zusammenführung ist sowohl platztechnisch als auch steuerungstechnisch nachteilig.

Der Erfindung liegt die Aufgabe zugrunde ein Transportsystem zu schaffen, bei dem die vorstehenden Nachteile vermieden sind. Erfindungsgemäß wird diese Aufgabestellung dadurch gelöst, dass das Transportsystem individuell steuerbare schienengebundene passive Shuttles zum Transport der aufgenommenen Produkte und eine Steuereinrichtung zum Steuern der einzelnen Shuttles aufweist und, dass das Transportsystem zum magnetischen Antreiben der Shuttles einen direkten magnetischen Antrieb aufweist, der aus einer Vielzahl von an den Schienen angeordneten individuell ansteuerbaren Linearmotoren gebildet ist, die von der Steuereinrichtung zeitgerecht angesteuert einen für die Steuereinrichtung übergeordnet ansteuerbaren Linearmotor zum Antreiben der Shuttles bezüglich des Transportwegs, der Transportgeschwindigkeit und der Transportrichtung bilden.

Es werden somit modulare, individuell ansteuerbare Linearmotoren durch die Steuereinrichtung derart angesteuert und zusammengeschaltet, dass diese Linearmotoren übergeordnet als einheitlicher homogener Linearmotor ansteuerbar und zum Antreiben und Abbremsen der Shuttles genutzt werden können. Der Einsatz eines solchen Linearmotors für ein Transportsystem eines Sortier- und Verteilsystems vorzugsweise in einem Kommissioniersystem zum Lagern und Kommissionieren von Produkten ist besonders vorteilhaft, da jeder Shuttle unabhängig von anderen Shuttles in dem Transportsystem bezüglich seiner Transportgeschwindigkeit und Transportrichtung individuell angetrieben wird. Dies ermöglicht eine einfache und effiziente Steuerung der einzelnen Shuttles, um entweder eine gewünschte Reihenfolge bestimmter Produkte auf dem Transportsystem für die darauffolgende Kommissionierung der Produkte herzustellen oder, um bestimmte Produkte an bestimmte Übergabevorrichtungen in Nebenschleifen zu transportieren. Dadurch, dass nur jeweils einzelne Shuttles abgebremst oder beschleunigt werden, weist das Transportsystem deutlich geringere Energiekosten als das bekannte Transportsystem auf. Weiters kann die Steuereinrichtung beim Beschleunigen und beim Abbremsen von Shuttles auf die Art und Standfestigkeit der Produkte auf dem jeweiligen Shuttle Rücksicht nehmen, weshalb ein Umfallen oder Herunterfallen der Produkte von dem Transportsystem vermieden wird.

Das Transportsystem weist weiters Positionssensoren auf, die den individuell ansteuerbaren Linearmotoren zugeordnet sind und für die Steuereinrichtung die aktuelle Position jedes Shuttles auf dem Transportsystem ermitteln. Die Steuereinrichtung legt für jeden Shuttle einen Transportweg und ein zugehöriges umlaufendes Transportfenster fest, in dem sich der Shuttle während des Transports befindet. Innerhalb des Transportfensters kann der Shuttle abgebremst oder beschleunigt werden, um Produkte abzugeben oder zu übernehmen oder auf geraden Transportstecken schneller als in Kurven oder auf Weichen zu fahren. Hierdurch ist eine sehr effiziente Steuerung der Transportwege der Shuttles auf dem Transportsystem gegeben.

Durch die Verlagerung der Shuttle Beladung und Entladung auf Nebenschleifen ergibt sich auch der Vorteil, dass die Beladung und Entladung der Shuttles bei geringeren Geschwindigkeiten der Shuttles erfolgen kann ohne den gesamten Durchsatz des Systems zu reduzieren. Da bei einer solchen Anordnung nur Shuttles mit Produkten, welche in dieser Nebenschleife entladen werden müssen an der Übergabevorrichtung zum Entladen ankommen, kann diese in besonders einfacher Weise gestaltet werden.

Weitere vorteilhafte Ausgestaltungen des erfindungsgemäßen Transportsystems werden im Folgenden anhand der Figuren näher erläutert.
Figur 1 zeigt ein Lagersystem mit einem Transportsystem mit individuell steuerbaren schienengebundenen Shuttles.
Figur 2 zeigt Rampen als Übergabevorrichtungen zwischen einer Fördertechnik mit angetriebenen Rollen und einem Transportsystem mit einem Linearmotor.
Figur 3 zeigt eine der Rampen gemäß Figur 2 mit einem Shuttle auf dem Transportsystem.
Figur 4 zeigt mehrere individuell ansteuerbare Linearmotoren des Transportsystems gemäß

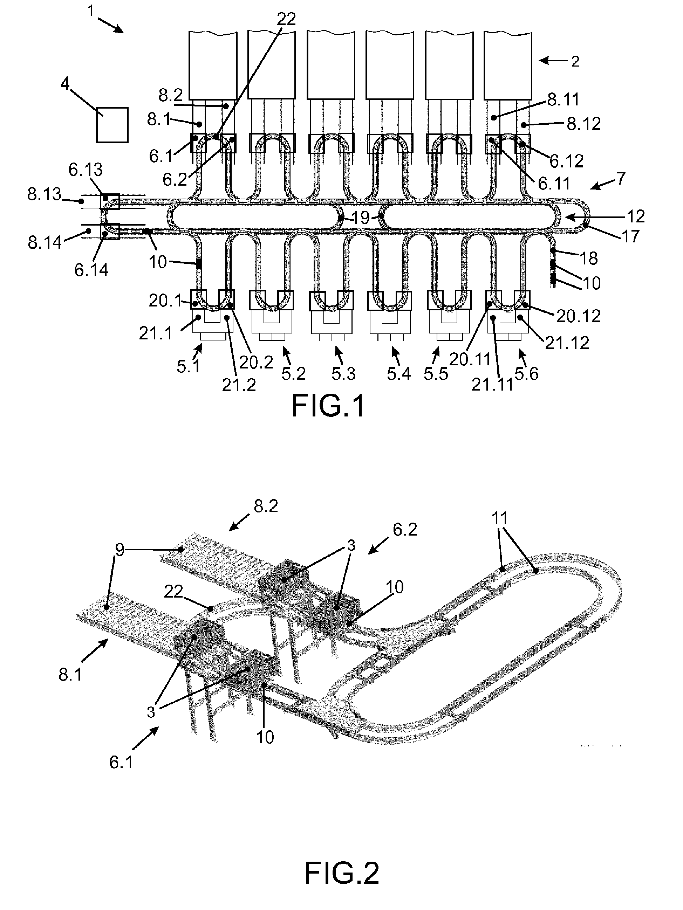

Figur 1 mit einer Steuereinrichtung.

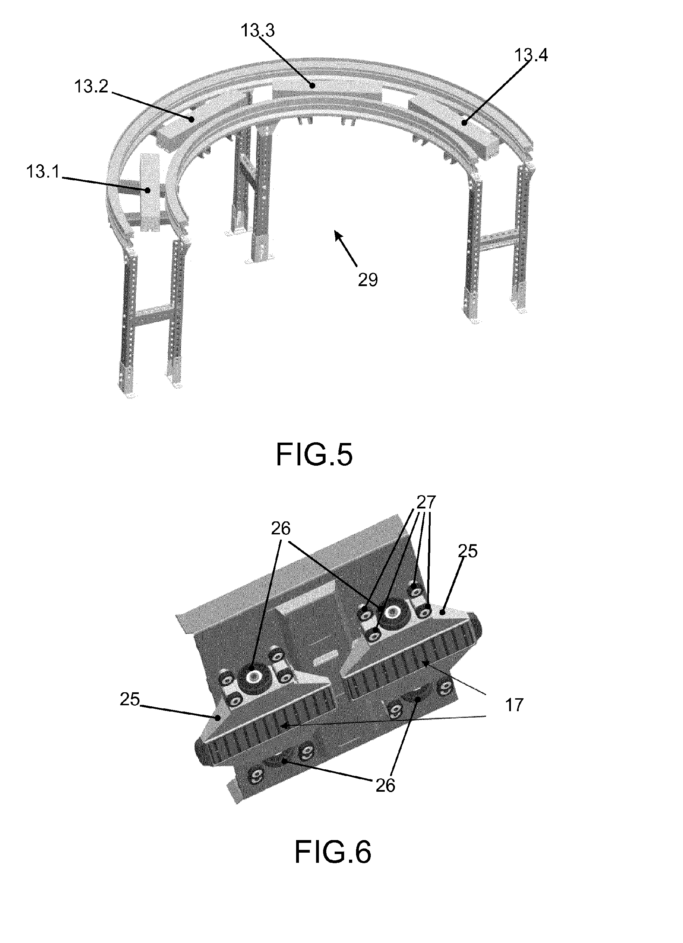

Figur 5 zeigt eine Kurvenschiene des Transportsystems gemäß Figur 1 mit mehreren individuell ansteuerbaren Linearmotoren.
Figur 6 zeigt einen Shuttle des Transportsystems gemäß Figur 1 in einer Schrägansicht von unten.

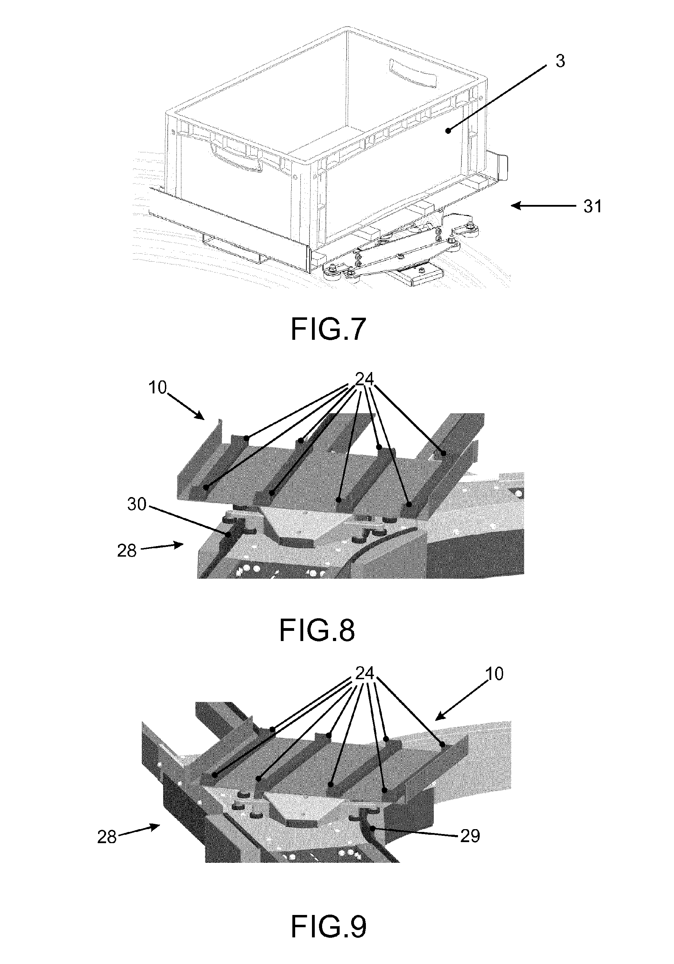

Figur 7 zeigt eine andere Art eines Shuttles für ein Transportsystem mit einer Kiste in der Produkte enthalten sind.
Figur 8 zeigt den Shuttle gemäß Figur 6 auf einer Weiche des Transportsystems bei Geradeausfahrt.
Figur 9 zeigt den Shuttle gemäß Figur 6 auf einer Weiche des Transportsystems bei einer Kurvenfahrt.

Figur 1 zeigt ein Lagersystem 1 mit Regalen 2 zum Lagern von Produkten. Die Regale 2 weisen mehrere Ebenen auf und je Ebene sind eine Vielzahl von Lagerplätzen vorgesehen, in denen Produkte in Kisten 3 gelagert sind. Eine übergeordnete Steuereinrichtung 4 verwaltet die Produkte in dem Lagersystem 1 und steuert sämtliche nachstehend beschriebenen Einrichtungen an, um Produkte in dem Lagersystem 1 einzulagern und in dem Lagersystem 1 gelagerte Produkte zu Waren-zu-Kommissionierer-Kommissionierplätzen 5.1 bis 5.6 zu transportieren. An diesen Waren-zu-Kommissionierer-Kommissionierplätzen 5.1 bis 5.6 entnehmen Kommissionierer die für einen Kommissionierauftrag vorgegebene Anzahl an Produkten und legen diese in einen Auftragsbehälter.

Um die für einen Kommissionierauftrag vorgesehenen Produkte in einer für das Verpacken der Produkte gewünschten Reihenfolge an den für den Kommissionierauftrag vorgesehenen Ware-zu-Kommissionierer-Kommissionierplatz 5.1 bis 5.6 zu transportieren, lagert die Steuereinrichtung 4 die zum Kommissionieren vorgesehenen Produkte in einer bestimmten Reihenfolge aus den Lagerplätzen der Regale 2 aus und übergibt diese an Übergabevorrichtungen 6.1, 6.3, 6.5, 6.7, 6.9, 6.11 an ein Transportsystem 7. Sogenannte Ebenenbediengeräte je Ebene der Regale 2 transportieren die ausgelagerten Produkte zu Liften der jeweiligen Regale 2, die die ausgelagerten Produkte auf Fördertechnikarme 8.1, 8.3, 8.5, 8.7, 8.9, 8.11 transportieren. Zu dem Lagersystem 1 angelieferte und in das Lagersystem 1 einzulagernde Produkte werden dem Lagersystem 1 über einen Fördertechnikarm 8.14 und eine Übergabevorrichtung 6.14 zugeführt und über die Übergabevorrichtungen 6.2, 6.4, 6.6, 6.8, 6.10, 6.12 und die Fördertechnikarme 8.2, 8.4, 8.6, 8.8, 8.10, 8.12, dem Lagersystem 1 zugeführt. Über andere Wege abzutransportierende ausgelagerte Produkte werden von dem Transportsystem 7 über eine Übergabevorrichtung 6.13 an einen Fördertechnikarm 8.13 abgegeben.

Gemäß dem vorliegenden Ausführungsbeispiel ist die Hauptfahrrichtung in der Hauptschleife 12 im Gegenuhrzeigersinn, wodurch sich die jeweils zugehörigen Übergabevorrichtungen und Fördertechnikarme für das Ein- und Auslagern aus den Regalen 2 ergeben. Gemäß einem anderen Ausführungsbeispiel könnte die Hauptfahrrichtung in der Hauptschleife 12 auch im Uhrzeigersinn festgelegt sein, wodurch die jeweils zugehörigen Übergabevorrichtungen und Fördertechnikarme für das Ein- und Auslagern aus den Regalen 2 anders festgelegt werden würden. Besonders vorteilhaft ist, dass einzelne Shuttles 10 jederzeit, wenn dies nötig ist, als Geisterfahrer entgegen der Hauptfahrrichtung über die Hautschleife 12 transportiert werden können.

Die beispielhaft in Figur 2 näher dargestellten Fördertechnikarme 8.1 und 8.2 sind an jeder Regalgasse jedes Regals 2 vorgesehen und weisen Rollen 9 auf, um die ausgelagerten Kisten 3 mit den Produkten zu den Übergabevorrichtungen 6.1 und 6.2 zu transportieren oder von dort zu übernehmen. Die Übergabevorrichtungen 6.1 bis 6.12 sind durch Rampen gebildet, mit denen die Kisten 3 von den Fördertechnikarmen 8.1 bis 8.12 auf Shuttles 10 geladen werden, worauf nachfolgend noch näher eingegangen ist. Die Übergabevorrichtungen 6.1 bis 6.12 bilden hierbei auch Aufnahmevorrichtungen zum Aufnehmen von Produkten auf das Transportsystem 7 und Abgabevorrichtungen zum Abgeben von Produkten von dem Transportsystem 7.

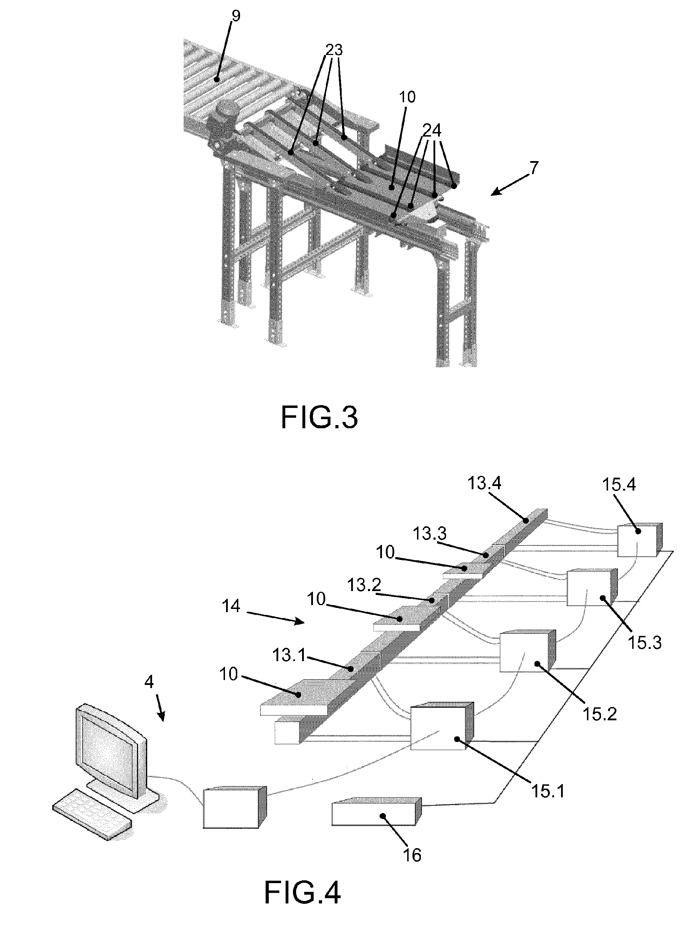

Das Transportsystem 7 weist nunmehr bezüglich der Transportrichtung und Transportgeschwindigkeit individuell steuerbare schienengebundene Shuttles 10 auf, die über Schienen 11 zumindest einer Hauptschleife 12 zum Transportieren der ausgelagerten Produkte und der einzulagernden Produkte zwischen den Übergabevorrichtungen 6.1 bis 6.14 und weiteren Übergabevorrichtungen 20.1-20.12 sowie 8.13 und 8.14 ausgebildet ist. Das Transportsystem 7 weist zum Antreiben der Shuttles 10 einen direkten magnetischen Antrieb auf, der aus einer Vielzahl von an den Schienen 11 angeordneten individuell ansteuerbaren Linearmotoren 13.1 bis 13.4 gebildet ist, wie dies in Figur 4 beispielhaft näher dargestellt ist. Die einzelnen Linearmotoren 13.1 bis 13.4 werden von der Steuereinrichtung 4 zeitgerecht angesteuert und bilden hierdurch einen für die Steuereinrichtung 4 übergeordnet homogen ansteuerbaren Linearmotor 14 zum Antreiben der einzelnen Shuttles 10 bezüglich des Transportwegs, der Transportgeschwindigkeit und der Transportrichtung.

In Figur 4 ist die übergeordnete Ansteuerung der zwischen den Schienen 11 angeordneten Linearmotoren 13.1 bis 13.4 durch die Steuereinrichtung 4 symbolisch dargestellt, wobei die Linearmotoren 13.1 bis 13.4 beispielsweise eine Länge von 0,5 Metern aufweisen. Jeder der Linearmotoren 13.1 bis 13.4 weist mehrere in Längsrichtung angeordnete Elektromagneten auf, denen eine Motorsteuerung 15.1 bis 15.4 zugeordnet ist, die von einer Energieversorgungseinheit 16 mit Energie versorgt und durch die Steuereinrichtung 4 angesteuert werden. Die Shuttles 10 weisen, wie in Figur 6 ersichtlich, Permanentmagnete 17 auf und werden durch das von den Elektromagneten erzeugte Magnetfeld angetrieben. Um einen Shuttle 10 über die Schienen 11 des Transportsystems 7 zu transportieren steuert ein Hardwarelayer der Software der Steuereinrichtung 4 die einzelnen Linearmotoren 13.1 bis 13.4 in der dafür nötigen zeitlichen und örtlichen Abfolge an. Ein organisatorisch darüber liegender Transportlayer der Software der Steuereinrichtung 4 kann somit den Linearmotor 14 des Transportsystems 7 als einheitlichen Linearmotor 14 zum Antrieb und zum Abbremsen der einzelnen individuellen Shuttles 10 ansteuern.

Hierdurch ergeben sich für das Lagersystem 1 wesentliche Vorteile, da die Steuereinrichtung 4 für jeden Shuttle 10 den optimalen Transportweg festlegen kann. Auf diesem Transportweg kann der Shuttle 10 in Nebenschleifen, wie die Überholschleife 17, geleitet und von anderen Shuttles 10 überholt werden, um die ausgelagerten Produkte in der gewünschten Reihenfolge zu dem vorgesehenen Waren-zu-Kommissionierer-Kommissionierplatz 5.1 bis 5.6 zu transportieren. Auch ein zwischenspeichern auf einer Pufferplätze aufweisenden Nebenstrecke 18 ist vorteilhaft, um ausgelagerte Produkte nach dem Kommissionieren an beispielsweise dem Waren-zu-Kommissionierer-Kommissionierplatz 5.2 wenig später für einen anderen Kommssionierauftrag zu dem Waren-zu-Kommissionierer-Kommissionierplatz 5.5 zu transportieren ohne das Produkt inzwischen wieder in das Regal 2 einlagern zu müssen. Die Nebenstrecke kann auch zum Parken von nicht genutzten Shuttles 10 oder defekten Shuttles 10 verwendet werden.

Besonders vorteilhaft ist es auch in der Hautschleife 12 Abzweigungen 19 vorzusehen, die eine Abkürzung des Transportwegs der Hauptschleife 12 ermöglichen, wenn beispielsweise ein ausgelagertes Produkt nach dem Kommissionieren an dem Waren-zu-Kommissionierer-Kommissionierplatz 5.1 über die Hauptschleife 12 und die erste Übergabevorrichtung 6.2 in das Regal 2 eingelagert werden soll. Durch die individuelle Steuerung jedes Shuttles 10 mit darauf befindlichem Produkt ist ein besonders effektiver Transport zwischen den Übergabevorrichtungen 6.1 bis 6.14 und den Übergabevorrichtung 20.1 bis 20.12 bei den Waren-zu-Kommissionierer-Kommissionierplätzen 5.1 bis 5.6 möglich. Die Übergabevorrichtungen 20.1 bis 20.12 sind ebenfalls durch Rampen gebildet, um die in die gewünschte Reihenfolge gebrachten ausgelagerten Produkte von den Shuttles 10 auf eine abgebende Fördertechnik 21.1 bis 21.12 zu laden, von der die ausgelagerten Produkte zu den Waren-zu-Kommissionierer-Kommissionierplätzen 5.1 bis 5.6 transportiert und von diesen wieder an das Transportsystem 7 abgegeben werden. Die abgebende Fördertechnik 21.1 bis 21.12 weist ebenfalls Rollen 9 auf, wie diese bei den Fördertechnikarmen 8.1 und 8.2 in Figur 2 dargestellt sind.

Aus den vorstehend erwähnten Gründen hat es sich als vorteilhaft erwiesen für das Transportsystem 7 den Linearmotor 14 als Antrieb vorzusehen. Für die Fördertechnikarme 8.1 bis 8.12 hat es sich als vorteilhaft erwiesen konventionelle Fördertechnik einzusetzen, da sich die notwendigen Pufferplätze für die Entkopplung der Regaltransportvorrichtung und der Shuttles 10 platz- und kostengünstiger realisieren lassen. Für die abgebende und aufnehmende Fördertechnik 21.1 bis 21.12 hat es sich aber als vorteilhaft erwiesen konventionelle Fördertechnik Zu verwenden, da es auf dieser möglich ist, die Kisten 3 bezüglich der Transportrichtung zu drehen. Dadurch ist es möglich die Kommissionierplätze 5.1 bis 5.6 in einer ergonomisch optimalen Form zu gestalten.

Als in den Nebenschleifen angeordnete Übergabevorrichtungen sind in diesem Ausführungsbeispiel Rampen vorgesehen, wie diese in den Figuren 2 und 3 dargestellt sind. Wie in Figur 2 erkennbar weist die Nebenschleife 22 zwei Rampen auf, um die nach dem Abgeben der Kisten 3 an der einen Rampe leeren Shuttles 10 bis zur anderen Rampe zu transportieren, um dort wieder andere Kisten 3 auf die leeren Shuttles 10 zu laden. Hierdurch können Transportwege leerer Shuttles 10 besonders kurz gehalten werden, was zur Entlastung des Transportsystems 7 vorteilhaft ist. Besonders vorteilhaft ist folglich auch in jeder Nebenschleife zumindest eine Aufnahme-/Abgabeeinrichtung beziehungsweise Übergabevorrichtung und wenn möglich sowohl eine Aufnahmevorrichtung und eine Abgabevorrichtung beziehungsweise zwei Übergabevorrichtungen vorzusehen. Hierdurch können die Transportwege mit leeren Shuttles 10 besonders kurz gehalten werden. Die Rampen sind derart unbeweglich ausgebildet und weisen nur einen angetriebenen Transportriemen pro Rampenarm 23 auf, dass ein Shuttle 10 zum Beladen mit ausgelagerte Produkte enthaltenden Kisten 3 unter die unbewegliche Rampe fahren kann. Hierbei fährt der Shuttle 10 unter Rampenarme 23, über die die Kisten 3 beim Beladen der Shuttles 10 hinunter gefördert wird. Beim Entladen der Shuttles 10 wir die Kiste 3 durch in den Figuren 8 und 9 deutlich erkennbare Haltenasen 24 des Shuttles 10 von dem durch den Linearmotor 14 angetriebenen Shuttle 10 auf die Rampenarme 23 geschoben und von denen auf die konventionelle Fördertechnik hinauf gefördert. Durch die passende Höheneinstellung der Rampenarme 23, damit der Shuttle 10 darunter durch fahren kann, können die Rampenarme 23 und somit die gesamte Rampe ohne verschiebbare Teile ausgeführt werden, was bezüglich der Zuverlässigkeit und Standzeit der Rampe besonders vorteilhaft ist. Ebenfalls vorteilhaft ist, dass die einzelne Rampe in beide Transportrichtungen und somit zum Übergeben von dem Transportsystem 7 und zum Übergeben auf das Transportsystem 7 verwendet werden kann.

Die Rampen weisen zum Abgeben von Produkten von Shuttles 10 des Transportsystems 7 auf die konventionelle Fördertechnik eine Steigung auf und die Rampen weisen zum Aufnehmen von Produkten von der konventionellen Fördertechnik auf Shuttles 10 des Transportsystems 7 ein Gefälle auf. Weiters ist die Steuereinrichtung 4 zum Transport der Shuttles 10 zum Abgeben der transportierten Produkte von den Shuttles 10 mit einer größeren Geschwindigkeit als die Transportriemen der Rampenarme 23 ausgebildet. Hierdurch werden die Kisten 3 vorteilhafterweise zuverlässig und ohne Verdrehung auf die Rampenarme 23 geschoben. Beim Abgeben der Produkte auf ein Shuttle 10 ist diese Geschwindigkeitsdifferenz in umgekehrter Weise abgebildet, was vorteilhaft zu einem sicheren Beladen der Shuttles 10 ohne ein Verdrehen der Produkte führt.

Figur 6 zeigt einen Shuttle des Transportsystems 7 gemäß Figur 1 in einer Schrägansicht von unten. Die in der Mitte des Shuttles 10 angeordneten Permanentmagnete 17 sind auf zwei Drehtellern 25 befestigt, die jeweils Hauptrollen 26 zum Abgeben der Traglast an die Schienen 11 und Führungsrollen 27 zum Führen des Shuttles 10 entlang der Geraden und Kurven und der Abzweigungsmitteln beziehungsweise Weichen 28 aufweisen. Durch die Befestigung der Permanentmagnete 17 an den drehbaren Drehtellern 25 ergibt sich eine besonders gute Überdeckung der Permanentmagnete 17 mit den Linearmotoren 13.1 bis 13.4, wenn der Shuttle 10 durch eine in Figur 5 dargestellte Kurvenschiene 29 fährt. Hierdurch werden die Shuttles 10 auch auf Kurvenschienen 29 und bei Weichen 28 zuverlässig und gleichmäßig angetrieben. Dadurch, dass die Shuttles 10 symmetrisch bezüglich ihrer beiden möglichen Transportrichtungen aufgebaut sind können diese richtungsunabhängig zum Transport in beide Transportrichtungen gleich gut verwendet werden. Die Shuttles 10 können somit gesteuert durch die Steuereinrichtung 4 jederzeit ihre Transportrichtung umkehren und somit auch als Geisterfahrer entgegen der Hauttransportrichtung auf der Hautschleife 12 oder einer der Nebenschleifen fahren. Diese Flexibilität ermöglicht besonders kurze Transportwege.

In den Figuren 8 und 9 ist ein Shuttle 10 auf der Weiche 28 bei Geradeausfahrt und bei Kurvenfahrt dargestellt. Je nach von der Steuereinrichtung 4 vorgesehenem Transportweg steuert die Steuereinrichtung Lenkmittel 29 und 30 der Weiche 28 an. Um den Shuttle 10 gerade aus über die Weiche 28 fahren zu lassen werden die Lenkmittel 29 abgesenkt und die Lenkmittel 30 angehoben, für Kurvenfahrt umgekehrt. Die jeweils angehobenen Lenkmittel 29 oder 30 kommen in Eingriff mit den Führungsrollen 27 und lenken somit den Shuttle 10 in die gewünschte Richtung. Hierdurch ist eine besonders zuverlässige und einfache Art einer Weiche 28 gegeben. Gemäß einer anderen Ausführungsform könnten die Weichen Lenkmittel auch seitlich verschieben, um Shuttles zur Geradeausfahrt oder zur Kurvenfahrt umzulenken.

Figur 7 zeigt eine andere Art eines Shuttles 31 für ein Transportsystem mit einer Kiste 3 in der Produkte enthalten sind. Dieser Shuttle 31 weist keine Haltenasen und eine andere Art der drehbaren Schienenführung auf. Es sind erfindungsgemäß weitere unterschiedliche Ausführungsformen von Shuttles realisierbar.

Das Transportsystem 7 gemäß Figur 1 weist entlang der Schienen 11 in den Figuren nicht näher dargestellte Positionssensoren auf, die durch Hallsensoren gebildet sind, deren Sensorinformationen von der Steuereinrichtung 4 zur Ermittlung der aktuellen Position jedes Shuttles 10 ausgewertet werden. Die Positionssensoren sind parallel zu den Motorwicklungen der Linearmotoren 13.1 bis 13.4 angeordnet und detektieren den individuellen Shuttle 10. Hierdurch ist vorteilhafterweise sichergestellt, dass die Steuereinrichtung 4 zu jedem Zeitpunkt genau weiß, wo sich welcher Shuttle 10 auf dem Transportsystem 7 befindet. Basierend auf diesen Positionsinformationen können die auf dem Transportweg befindlichen Motorsteuerungen 15. bis 15.4 zeitgerecht angesteuert werden.

Die Steuereinrichtung 4 ist weiters zum Zuteilen eines umlaufenden Transportfensters für jeden Shuttle 10 ausgebildet, wobei der Shuttle 10 innerhalb des Transportfensters von der Steuereinrichtung 4 abgebremst und beschleunigt werden kann. Innerhalb des Transportfensters kann der Shuttle 10 von der Steuereinrichtung 4 abgebremst werden, um Produkte auf den Shuttle 10 aufzunehmen oder, um den Shuttle 10 durch eine Kurve der Hauptschleife 10 oder Weiche 28 zu transportieren. Weiters kann innerhalb des Transportfensters beschleunigt werden, um den Shuttle 10 vorbereitend für einen Belade-oder Entladevorgang eine längere Zeit das langsam Fahren zu ermöglichen oder, um größere Differenzen zwischen der Transport- bzw. Ladegeschwindigkeit zu ermöglichen. Durch das Vorsehen des Transportfensters ist einerseits durch die Steuereinrichtung 4 der Bereich in dem Transportsystem 7 klar definiert, in dem sich der jeweilige Shuttle 10 zu einer bestimmten Zeit befindet, andererseits ist ausreichend Flexibilität für lokal nötiges Abbremsen oder Beschleunigen gegeben.

In dem Transportsystem 7 ist die Steuereinrichtung 4 weiters zum Abschalten eines Steckenabschnittes des Transportsystems 7 ausgebildet, wenn bei einem Shuttle 10 ein Fehlerfall oder Wartungsbedarf auftritt. Weiters kann die Steuereinrichtung 4 jederzeit fehlerhafter Shuttles 10 in Nebenschleifen ausschleusen, wenn dies nötig ist. Hierdurch ist vorteilhafterweise erreicht, dass bei Störfällen oder Wartungsfällen der normale Betrieb des Transportsystems 7 im Wesentlichen ohne Behinderung fortgesetzt werden kann.

Es kann erwähnt werden, dass Übergabevorrichtungen beziehungsweise Abgabe- und Aufnahmevorrichtungen auch durch den Lift in einem der Regale des Lagersystems oder durch andere im Bereich von Lager- und Kommissioniersytemen übliche Elemente gebildet sein können.

Es kann erwähnt werden, dass bei einem Lagersystem gemäß einem weiteren Ausführungsbeispiel jeder Shuttle über einen eigenen autonomen Antrieb verfügen kann. Der Antrieb kann durch einen Elektromotor gebildet sein, der durch einen Akkumulator gespeist wird, wobei eine Steuereinrichtung des Shuttles einen niedrigen Ladezustand des Akkumulators detektieren und den Shuttle zeitgerecht zu einer Ladestation steuern würde. Alternativ zu den Akkumulatoren kann die Energieversorgung auch mit längs der Schienen angeordneten Stromschienen und Schleifkontakten am Shuttle ausgeführt werden.

Es kann erwähnt werden, dass als Produkte jegliche Art von Fördergütern wie beispielsweise Behälter oder Kartons zu verstehen sind. Als schienengebundene Shuttles ist weiters jegliche Art von mechanisch oder elektromechanisch bewegten beziehungsweise transportierten Shuttles zu verstehen, die keine eigene gesteuerte Lenkvorrichtung zur Vorgabe des Transportweges aufweisen.

## Patentansprüche

1. Transportsystem (7) für ein Sortier- und Verteilsystem vorzugsweise in einem Kommissioniersystem zum Lagern und Kommissionieren von Produkten, wobei das Transportsystem (7) zumindest eine Hauptschleife (12) zum Transportieren von Produkten, mindestens eine Aufnahmevorrichtung (6.1 bis 6.14) zum Aufnehmen der Produkte und mindestens zwei Abgabevorrichtungen (20.1 bis 20.12) zum Abgeben der Produkte aufweist, wobei Aufnahmevorrichtungen (6.1 bis 6.14) und Abgabevorrichtungen (20.1 bis 20.12) in Nebenschleifen angeordnet sind, **dadurch gekennzeichnet, dass** das Transportsystem (7) individuell steuerbare schienengebundene passive Shuttles (10) zum Transport der aufgenommenen Produkte und eine Steuereinrichtung (4) zum Steuern der einzelnen Shuttles (10) aufweist und, dass das Transportsystem (7) zum magnetischen Antreiben der Shuttles (7) einen direkten magnetischen Antrieb aufweist, der aus einer Vielzahl von an den Schienen (11) angeordneten individuell ansteuerbaren Linearmotoren (13.1 bis 13.4) gebildet ist, die von der Steuereinrichtung (4) zeitgerecht angesteuert einen für die Steuereinrichtung (4) übergeordnet ansteuerbaren Linearmotor (14) zum Antreiben der Shuttles (10) bezüglich des Transportwegs, der Transportgeschwindigkeit und der Transportrichtung bilden.

2. Transportsystem (7) gemäß Anspruch 1, **dadurch gekennzeichnet, dass** die Steuereinrichtung (4) zum individuellen Steuern der einzelnen Shuttles (10) ausgebildet ist, um die auf das Transportsystem (7) aufgenommenen Produkte an die zum Abgeben der jeweiligen Produkte vorgesehenen Abgabevorrichtungen (20.1 bis 20.12) zu verteilen.

3. Transportsystem (7) gemäß einem der vorstehenden Ansprüche, **dadurch gekennzeichnet, dass** die Steuereinrichtung (4) zum individuellen Steuern der einzelnen Shuttles (10) ausgebildet ist, um die auf das Transportsystem (7) aufgenommenen Produkte in eine für das Kommissionieren der Produkte gewünschte Reihenfolge zu bringen, wobei die Steuereinrichtung (4) einzelne Shuttles (10) für Überholvorgänge in zumindest eine Nebenschleife (17, 18) zur Hauptschleife (12) steuert.

4. Transportsystem (7) gemäß einem der vorherigen Ansprüche, **dadurch gekennzeichnet, dass** entlang der Schienen (11) des Transportsystems (7) Positionssensoren, insbesondere Hallsensoren vorgesehen sind, deren Sensorinformationen von der Steuereinrichtung (4) zur Ermittlung der aktuellen Position jedes Shuttles (10) ausgewertet werden.

5. Transportsystem (7) gemäß Anspruch 4, **dadurch gekennzeichnet, dass** die Positionssensoren parallel zu den Motorwicklungen der Linearmotoren (13.1 bis 13.4) angeordnet sind.

6. Transportsystem (7) gemäß einem der vorherigen Ansprüche, **dadurch gekennzeichnet, dass** die Steuereinrichtung (4) für jeden Shuttle (10) zum Zuteilen eines umlaufenden Transportfensters ausgebildet ist, wobei der Shuttle (10) innerhalb des Transportfensters von der Steuereinrichtung (4) abgebremst und beschleunigt werden kann, um insbesondere eine der folgenden Aktivitäten zu ermöglichen: Abbremsen, um Produkte auf den Shuttle (10) aufzunehmen; Abbremsen, um den Shuttle (10) durch eine Kurve der Hauptschleife (12) oder Abzweigungen (19) zu transportieren; Beschleunigen des Shuttles (10) auf der Geraden der Hauptschleife 12).

7. Transportsystem (7) gemäß einem der vorherigen Ansprüche, **dadurch gekennzeichnet, dass** die Steuereinrichtung (4) zum Abschalten eines Steckenabschnittes des Transportsystems (7) ausgebildet ist, wenn bei einem Shuttle (10) ein Fehlerfall oder Wartungsbedarf auftritt.

8. Transportsystem (7) gemäß einem der vorherigen Ansprüche, **dadurch gekennzeichnet, dass** die Steuereinrichtung (4) zum Ausschleusen fehlerhafter Shuttles (10) ausgebildet ist.

9. Transportsystem (7) gemäß einem der vorherigen Ansprüche, **dadurch gekennzeichnet, dass** bei den Schienen (11) an Abzweigungen Abzweigungsmittel (28) vorgesehen sind, die von der Steuereinrichtung (4) gesteuert abgesenkt oder angehoben und/oder seitlich verschoben werden, um den jeweiligen Shuttle (10) auf die vorgesehene ableitende Schiene zu lenken.

10. Transportsystem (7) gemäß Anspruch 9, **dadurch gekennzeichnet, dass** die Shuttles (10) mehrere Permanentmagnete (17) aufweisen und, dass Hauptrollen (26) zum Abgeben der Traglast an die Schienen (11) und Führungsrollen (27) zum Führen des Shuttles (10) entlang der Abzweigungsmittel (28) vorgesehen sind.

11. Transportsystem (7) gemäß Anspruch 9, **dadurch gekennzeichnet, dass** zumindest ein Shuttle (10) des Transportsystems (7) zwei drehbare Schienenführungen (25) aufweist, um eine ausreichende Überdeckung der Motorwicklungen der Linearmotoren (13.1 bis 13.4) in einer Kurvenschiene (29) mit den Permanentmagneten (17) des Shuttles (10) zu gewährleisten.

12. Transportsystem (7) gemäß einem der vorherigen Ansprüche, **dadurch gekennzeichnet, dass** dem Transportsystem (7) aus dem Lager (2) ausgelagerte Produkte über eine Fördertechnik (8.1 bis 8.12) zuführbar sind, wobei zwischen Fördertechnik (8.1 bis 8.12) und Schienen (11) des Transportsystems (7) eine Rampe als Aufnahmevorrichtung (6.1 bis 6.14) vorgesehen ist, über die die ausgelagerten Produkte auf die Shuttles (10) geladen werden.

13. Transportsystem (7) gemäß Anspruch 12, **dadurch gekennzeichnet, dass** die Rampe derart unbeweglich ausgebildet ist, dass ein Shuttle (10) zum Beladen mit ausgelagerten Produkten unter die unbewegliche Rampe fahren kann.

14. Transportsystem (7) gemäß einem der Ansprüche 12 oder 13, **dadurch gekennzeichnet, dass** die zumindest eine Rampe des Transportsystems (7) sowohl zum Beladen von Produkten auf Shuttles (10) als auch zum Entladen von Produkten von Shuttles (10) ausgebildet ist.

15. Transportsystem (7) gemäß einem der Ansprüche 12 bis 14, **dadurch gekennzeichnet, dass** Abgabevorrichtungen bildende Rampen zum Abgeben von Produkten von Shuttles des Transportsystems auf die Fördertechnik eine Steigung aufweisen und, dass Aufnahmevorrichtungen (20.1 bis 20.12) bildende Rampen zum Aufnehmen von Produkten von der Fördertechnik (21.1 bis 21.12) auf Shuttles (10) des Transportsystems (7) ein Gefälle aufweisen und, dass die Steuereinrichtung (4) zum Transport der Shuttles (10) zum Abgeben der transportierten Produkte von den Shuttles (10) mit einer größeren Geschwindigkeit ausgebildet ist als zum Transport der Shuttles (10) beim Aufnehmen von Produkten auf die Shuttles (10).

16. Transportsystem (7) gemäß einem der vorherigen Ansprüche, **dadurch gekennzeichnet, dass** die Shuttles (10) richtungsunabhängig zum Transport in beide Transportrichtungen gleich gut ausgebildet sind.

17. Transportsystem (7) gemäß einem der vorherigen Ansprüche, **dadurch gekennzeichnet, dass** jede Nebenschleife zumindest eine Abgabevorrichtung (6.1 bis 6.14) und/oder eine Aufnahmevorrichtung (20.1 bis 20.12) aufweist.
